Europäisches Patentamt

European Patent Office

Office européen des brevets

(11) Publication number: **0 184 816**
**A2**

(12) # EUROPEAN PATENT APPLICATION

(21) Application number: 85115680.2

(51) Int. Cl.⁴: **H 04 L 11/16**

(22) Date of filing: 10.12.85

(30) Priority: 13.12.84 US 681414

(43) Date of publication of application: 18.06.86
Bulletin 86/25

(84) Designated Contracting States: **DE GB**

(71) Applicant: **HONEYWELL INC., Honeywell Plaza,
Minneapolis Minnesota 55408 (US)**

(72) Inventor: **Mielke, Gordon E., 524 Cloud Court,
Schaumburg Illinois 60193 (US)**
Inventor: **Newcombe, William R., Jr., 1335 Larchmont
Drive, Buffalo Grove Illinois 60090 (US)**

(74) Representative: **Herzbach, Dieter et al, Honeywell
Europe S.A. Holding KG Patent- und Lizenzabteilung
Kaiserleistrasse 55 Postfach 184, D-6050 Offenbach am
Main (DE)**

(54) **Data transmission system.**

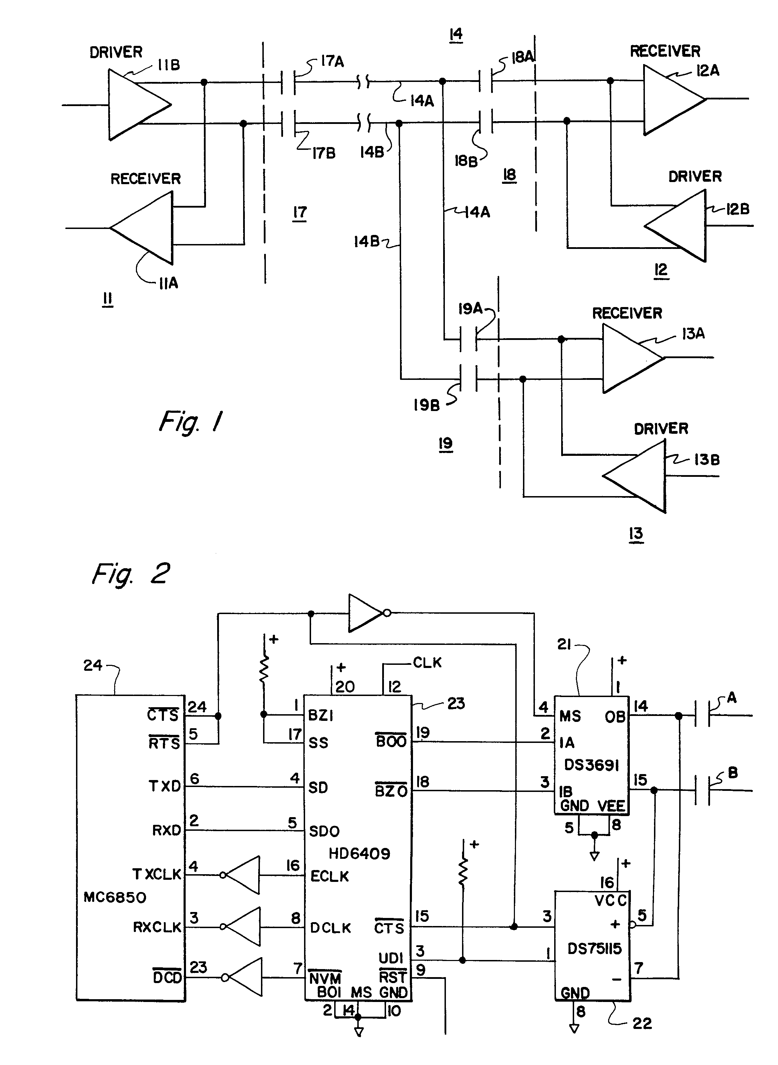

(57) A system is devised in which carrierless baseband data signals are AC capacitively coupled to a transmission channel (14) including first and second stations (11, 12) for transmitting and receiving carrierless baseband data signals to and from said transmission channel (14), where a capacitive coupler (17, 18) serves to AC capacitively coupling the first and second stations to the transmission channel so that the first and second stations can supply and receive carrierless baseband data signals to and from the transmission channel (Fig. 1).

HONEYWELL INC.                          December 9, 1985
Honeywell Plaza                         C2010640 EP
Minneapolis, Minn. 55408 USA            Hz/ep

Data Transmission System

The present invention relates to a data transmission system according to the preamble of claim 1.

Multipoint data communication systems are systems in which multiple stations are connected to a common party transmission channel. In most systems, each station has both receiving and transmitting capability so that each station can communicate bidirectionally with any other station connected into the system. One of the stations may or may not be a master station for performing the usual master station functions. But all stations must be connected to the transmission channel.

The usual way of connecting a station to the transmission channel is by using a direct current attachment. However, a direct current attachment does not address one of the major problems with such prior art arrangements, i.e. if either the driver or receiver of a station becomes internally shorted, the entire transmission line becomes inoperative.

If the driver and receiver are direct current isolated from the transmission channel by the use of capacitors, a defective station cannot degrade the transmission channel and all other devices connected to the transmission channel can continue to communicate. An added advantage of the use of capacitors to connect the drivers and receivers of the stations to the transmission channel is that the low frequency noise immunity of the transmission system is increased, where low frequency refers to signals of about 60 Hz or less. That is, the low frequency noise induced on the transmission channel will be blocked by the capacitive coupling and will not be applied directly to the drivers and receivers.

While there has been some suggestion in the prior art that capacitors can be used to connect transmitting and receiving stations to transmission channels, these suggestions involve the use of carrier signals which are modulated by the data to be transmitted. Such systems require the use of an oscillator for generating the carrier signal and unnecessarily complicate the transmission system.

It is therefore the object of the present invention to devise a simple and reliable data transmission system.

This object is achieved by the characterizing features of claim 1. Further advantageous embodiments of the inventive system may be taken from the subclaims.

Accordingly, the present invention relates to a system in which carrierless baseband data signals using alternating current are capacitvely coupled to a transmission channel in which first and second stations for transmitting and receiving carrierless baseband data signals are connected by capacitive couplers to a transmission channel so that the first and second stations can supply and receive carrierless baseband data signals to and from the transmission channel.

These and other features and advantages will become more apparent from a detailed consideration of the invention in which:

Figure 1 shows the receivers and drivers of plural stations capacitively coupled to a transmission channel in one embodiment of the invention;

Figure 2 shows one of the station couplers of Figure 1 in more detail;

Figure 3 shows the Manchester coding for the Manchester encoder/decoder 23 shown in Figure 2;

Figure 4 shows generally a multistation system which can use the type of station coupler shown in Figure 2;

Figure 5 shows the receivers and drivers of plural stations capacitively coupled to a transmission channel in an alternative embodiment of the invention;

Figure 6 shows the Universal Synchronous Asynchronous Receiver/Transmitter and Manchester Encoder/Decoder used to interface a station with receivers and drivers of Figure 5; and,

Figure 7 shows generally a multistation system which can use the type of station coupler shown in Figures 5 and 6.

Figure 1 shows three stations 11, 12 and 13 of a multistation data communication system. Stations 11, 12 and 13 include respective receivers 11A, 12A and 13A for receiving data from the communication channel and respective drivers 11B, 12B and 13B for impressing data upon the communication channel. Communication channel 14 comprises lines 14A and 14B.

Station 11 is connected to communication channel 14 by capacitive coupler 17. Capacitive coupler 17 takes the form of capacitor 17A for connecting both driver 11B and receiver 11A to line 14A and capacitor 17B for connecting both receiver 11A and driver 11B to transmission line 14B. Similarly, station 12 is connected to transmission channel 14 by capacitive coupler 18. Capacitive coupler 18 comprises capacitor 18A for connecting receiver 12A and driver 12B to line 14A and capacitor 18B for connecting receiver 12A and driver 12B to line 14B. Finally, capacitive coupler 19 connects station 13 to communication channel 14 and includes capacitor 19A for connecting receiver 13A and driver 13B to line 14A and capacitor 19B for connecting receiver 13A and driver 13B to line 14B. Drivers 11B, 12B and 13B supply carrierless baseband data signals through their respective capacitors to the transmission channel. Thus, the data signals are not used to modulate a carrier signal. The data signals supplied to transmission channel 14 are the baseband data signals alone and are not carried by a carrier signal over transmission channel 14.

Figure 2 shows one of the stations shown in Figure 1 in more detail. Capacitors A and B are used to couple driver 21 and receiver 22 to the transmission channel. Data to be transmitted are supplied to driver 21 by Manchester encoder/decoder 23. Manchester encoder/decoder 23 receives its data from microprocessor 24. Received data is derived from receiver 22 and supplied to Manchester encoder/decoder 23 for decoding. The decoded data is then supplied to microprocessor 24.

Data to be transmitted has been encoded in the past by arranging the data in Non Return to Zero (NRZ) data streams. NRZ requires no special encoding or decoding format. In NRZ transmission, a 1 is typically coded as a high level signal and a 0 is coded as a low level signal. Such levels, however, are susceptible to base line wander and jitter and there is no provision for line error rate monitoring. The problem of DC wander associated with long strings of 1's and the jitter synchronization problem associated with long strings of 0's can most readily be eliminated by introducing scrambling or redundancy. Redundancy can be accomplished by making the transmitted data rate, or band rate, greater than the binary information rate.

The Manchester code is an improvement over NRZ because the Manchester code is a transitional rather than a state code. A rising mid cell pulse represents a 0 and a falling mid cell pulse represents a 1. Therefore, the signal forms its own clock pulse because in every cell a transition occurs. Thus, the single pair signal bus can carry both phase coherent clock and data signals and decoders can then reference this built in clock signal for synchronization. A valid Manchester digit has a level transition in the middle of its data cell. Should noise cause an inversion in either half of the cell, the lack of a mid bit transmission indicates a nonvalid Manchester data. Undetectable errors can only happen if noise reverses both halves of the cell.

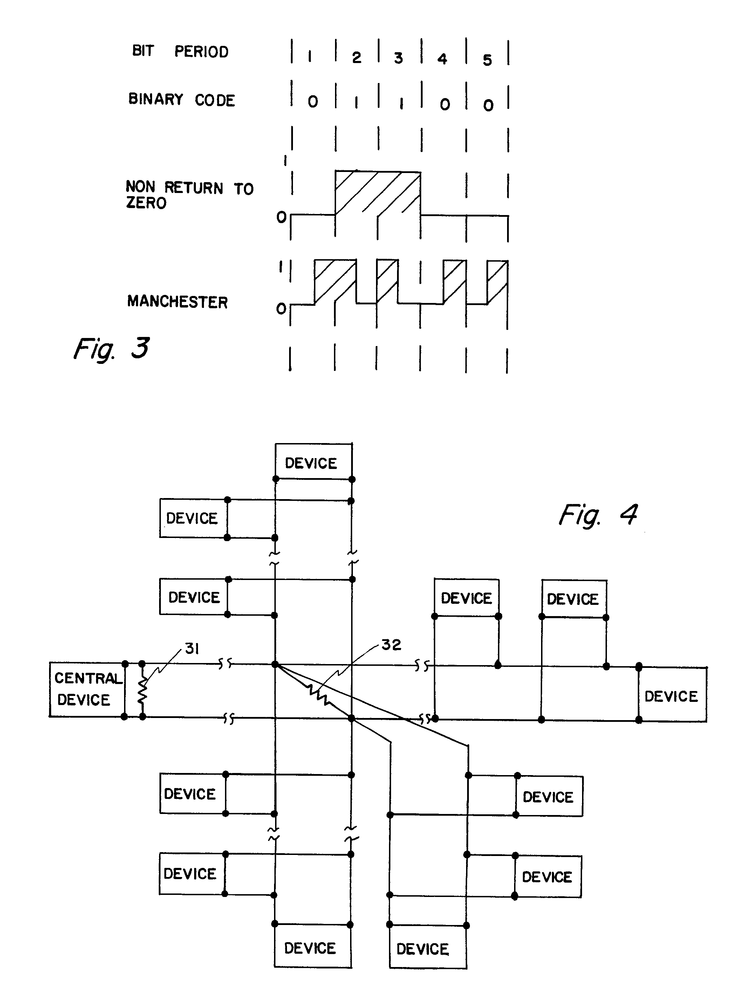

Figure 3 illustrates the difference between NRZ data bits and Manchester encoded data bits.

The clocks of microprocessor 24 and Manchester encoder/decoder 23 are arranged for transmitting data to the transmission line at a rate of 9600 baud. It may be convenient to arrange the microprocessor and Manchester encoder/decoder for also having the capability of transmitting at either half this rate or twice this rate. At 9600 baud, capacitors A and B shown in Figure 2 can, for example, be 10 microfarad capacitors.

Microprocessor 24 sends NRZ code to Manchester encoder/decoder 23 and receives NRZ code from Manchester encoder/decoder 23. Thus, Manchester encoder/decoder 23 must convert the NRZ code it receives from the microprocessor into Manchester code for supply to driver 21 and must convert the Manchester code received from receiver 22 into NRZ code for supply to microprocessor 24.

The ECLK output from Manchester encoder/decoder 23 is used as the clock source at pin 4 of microprocessor 24 to drive the microprocessor circuits which supply the NRZ data to Manchester encoder/decoder 23 at pin 4. Further, pin 15 at device 23 is used to control outputs ECLK, BOO and BZO. A low on pin 15 enables encoder outputs ECLK, BOO and BZO while a high on pin 15 forces BZO and BOO high and holds ECLK low. During encoding, serial NRZ data is clocked out of microprocessor 24 and into device 23 at its input pin 4 on a high to low transition of ECLK during the command sync pulse. The NRZ data received is encoded into Manchester data and transmitted out on BOO and BZO following the command sync pulse. Manchester code is received from receiver 22 at pin 3 of encoder/decoder 23 with the encoder/decoder 23 clock being synchronized to the incoming data. Manchester encoder/decoder 23 decodes this data into NRZ data and supplies it out at pin 5 for supply to pin 2 of microprocessor 24.

The station shown in Figure 2 can be used in a multidevice system such as that shown in Figure 4. Figure 4 shows a star configuration but it should be appreciated that the present invention can be used in other types of configuration such as simple straight line systems and distributed tap systems. In the star configuration as shown in Figure 4, end of line or termination resistors 31 and 32 are placed as shown. Thus, termination resistor 31 is located across the central device and termination resistor 32 is located at the hub of the star. In a distributed tap configuration, termination resistors should be placed at the central end and at the tap with the longest cable length. In a straight line configuration, termination resistors should be placed at the start and at the end of the transmission line.

Thus, carrierless baseband data signals are supplied by the stations to the transmission channel through capacitive couplers which permit the transmission of the baseband data signals without carrier and which allows communication between the stations of a data communication system even if one station is shorted.

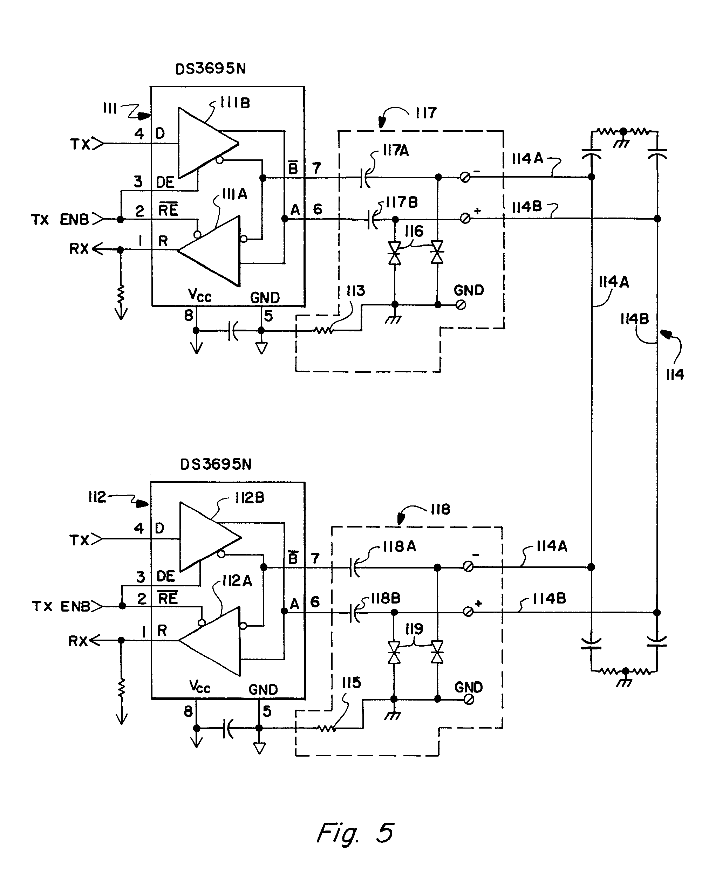

Figures 5, 6 and 7 show an alternative embodiment of the invention. Figure 5 shows two stations 111 and 112 of a multistation data communication system. Stations 111 and 112 include respective receivers 111A and 112A for receiving data from the communication channel and respective drivers 111B and 112B for impressing data upon the communication channel. Communication channel 114 comprises lines 114A and 114B.

Station 111 is connected to a communication channel 114 by capacitive coupler 117. Capacitive coupler 117 takes the form of capacitor 117A for connecting both driver 111B and receiver 111A to line 114A and capacitor 117B for connecting both receiver 111A and driver 111B to transmission line 114B. Similarly, station 112 is connected to transmission channel 114 by capacitive coupler 118. Capacitive coupler 118 comprises capacitor 118A for connecting receiver 112A and driver 112B to line 114A and capacitor 118B for connecting receiver 112A and driver 112B to line 114B. Drivers 111B and 112B supply carrierless baseband data signals through their respective capacitors to the transmission channel. Thus, as in the previously described embodiment, the data signals are not used to modulate a carrier signal. The data signals supplied to transmission channel 114 are the baseband data signals alone and are not carried by a carrier signal over transmission channel 114.

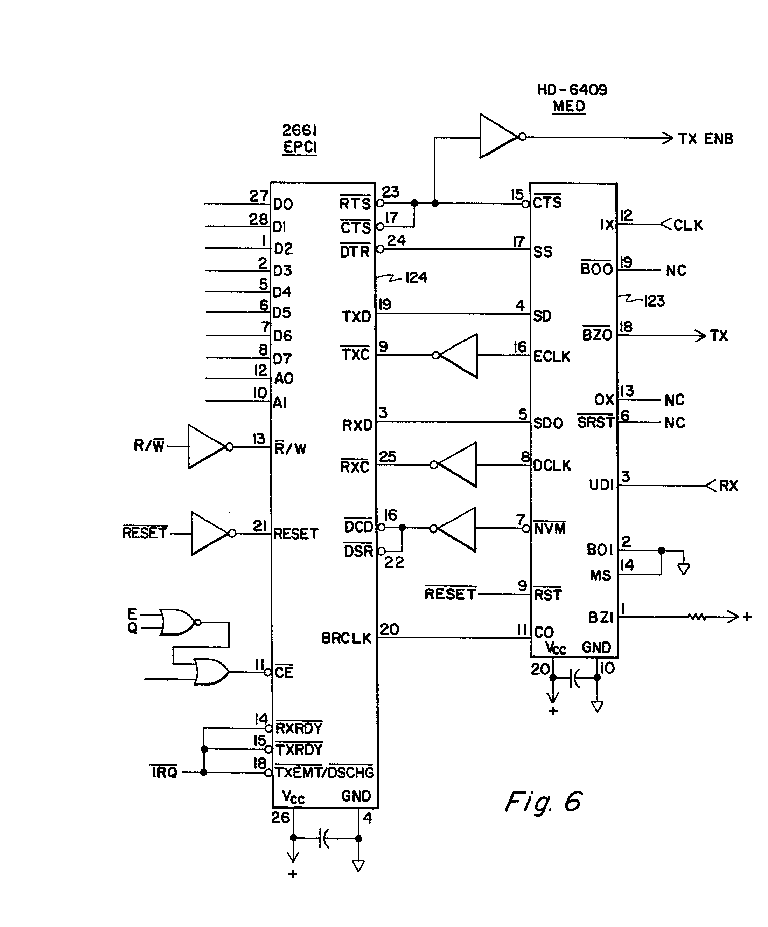

Figure 6 shows an interface for coupling a station with the system of Figure 5. Data to be transmitted are supplied to transceiver driver 111B, of Figure 5, by Manchester encoder/decoder 123. Manchester encoder/decoder 123 receives its data from Universal Synchronous Asynchronous Receiver/Transmitter (USART) 124. Received data is derived from transceiver 111A and supplied to Manchester encoder/decoder 123 for decoding. The decoded data is then supplied to USART 124.

Resistor 113 and resistor 115 are installed between logic common and earth ground to provide impedance high enough to prevent ground loop current from flowing within the logic common power bus while still providing a return reference for the drivers and receivers. Bipolar transient suppressors 116 and 119 provide static and transient voltage discharge from the party line bus to ground at each station.

The clocks of USART 124 and Manchester encoder/ decoder 123 are arranged for transmitting data to the transmission line at a rate of 9600 baud. It may be convenient to arrange the USART and Manchester encoder/ decoder for also having the capability of transmitting at either half this rate or twice this rate. At 9600 baud, capacitors 117 and 118 shown in Figure 5 can, for example, be 10 microfarad capacitors.

USART 124 sends NRZ code to Manchester encoder/ decoder 123 and receives NRZ code from Manchester encoder/decoder 123. Thus, Manchester encoder/decode 123 must convert the NRZ code it receives from the USART into Manchester code for supply to driver 111B and must convert the Manchester code received from receiver 111A into NRZ code for supply to USART 124.

The ECLK output from Manchester encoder/decoder 123 is used as the transmit clock source at pin 9 of USART 124 to drive the USART circuits which supply the NRZ data to Manchester encoder/decoder 123 at pin 4. Further, pin 15 of device 123 is used to control outputs ECLK, BOO and BZO. A low on pin 15 enables encoder outputs ECLK, BOO and BZO while a high on pin 15 forces BZO and BOO high and holds ECLK low. During encoding, serial NRZ data is clocked out of USART 124 and into device 123 at its input pin 4 on a high to low transition of ECLK. The NRZ data received is encoded into Manchester data and transmitted out on BOO and BZO following the command sync pulse. Manchester code is received from receiver 112A at pin 3 of encoder/decoder 123 with the encoder/decoder 123 clock being synchronized to the incoming data. Manchester encoder/ decoder 123 decodes this data into NRZ data and supplies it out at pin 5 for supply to pin 2 of USART 124.

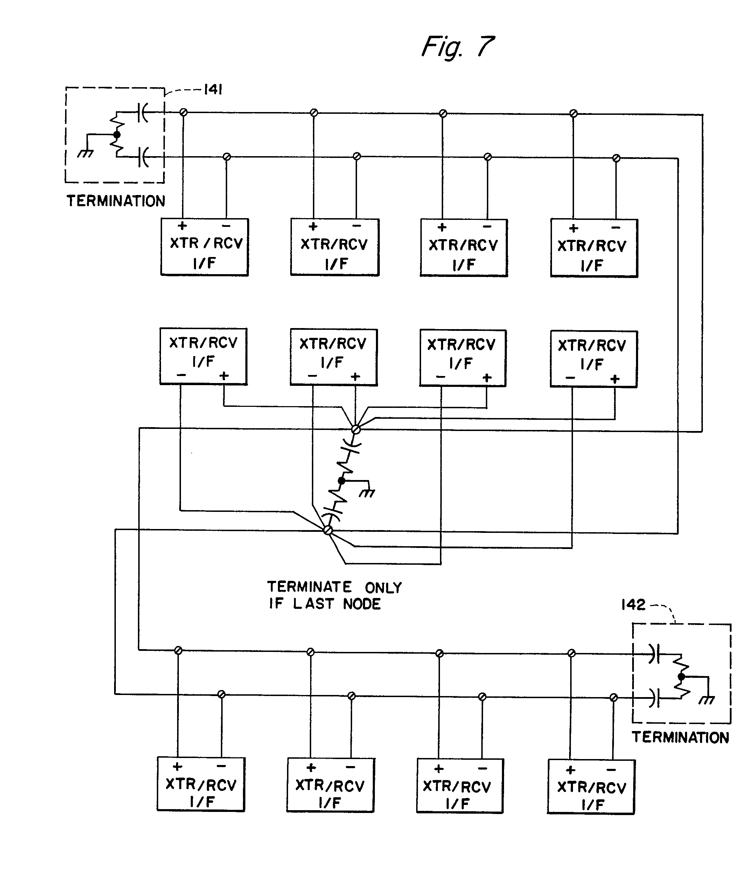

The station shown in Figures 5 and 6 can be used in a multidevice system such as that shown in Figure 7. Figure 7 shows a party line bus configuration employing short stub straight line systems, star node systems, and distributed tap systems. In the party line bus configuration as shown in Figure 7, end of line termination networks 141 and 142 are placed as shown. Thus, termination network 141 is located across one end of the bus and termination network 142 is located across the other end of the bus. In a distributed tap configuration, termination networks should be placed at the ends with the longest cable length.

Thus, carrierless baseband data signals are supplied by the stations to the transmission channel through capacitive couplers which permit the transmission of the baseband data signals without carrier and which allows communication between the stations of a data communication system even if one station is shorted.

Claims:

1. Data transmission system comprising:
   at least first and second stations (11, 12) for transmitting and receiving data signals; and
   a transmission channel (14) for connecting those stations, c h a r a c t e r i z e d   b y
   the use of carrierless baseband data signals and the use of capacitive coupling means (17, 18) for AC capacitively coupling said at least first and second stations (11, 12) to said transmission channel (14) so that said at least first and second stations can supply and receive carrierless baseband data signals to and from said transmission channel.

2. System according to claim 1, c h a r a c t e r i z e d   i n   t h a t   each of said first and second stations (11, 12) comprises a Manchester encoder/decoder (23) and driver/receiver means (21, 22) for connecting said Manchester encoder/decoder to said capacitive coupling means, said Manchester encoder/decoder serving for Manchester encoding said carrierless baseband data signals to be transmitted by said transmission channel (14).

3. System according to claim 2, c h a r a c t e r i z e d   i n   t h a t   each of said first and second stations (11, 12) comprises microprocessor means (24) connected to a respective Manchester encoder/decoder (23) for supplying NRZ data to said Manchester encoder/decoder which converts the NRZ data to Manchester data, said Manchester encoder/decoder serving to receive Manchester data and to convert said Manchester data to NRZ data for supply to said microprocessor means.

4. System according to claim 2, c h a r a c t e r i z e d   i n   t h a t   each of said first and second stations (11, 12) comprise Universal Synchronous/Asynchronous Receiver/Transmitter (USART) means (124) connected to a respective Manchester encoder/decoder (123) for supplying NRZ data to said Manchester encoder/decoder which converts the NRZ data to Manchester data, said Manchester encoder/ decoder serving to receive Manchester data and to convert said Manchester data to NRZ data for supply to said USART means.

5. System according to one of claims 1 to 4, c h a r a c - t e r i z e d   i n   t h a t   said first and second stations (11, 12) comprise means for transmitting data at a rate of less than 20,000 baud.

6. System according to claim 5, c h a r a c t e r i z e d i n   t h a t   said first and second stations (11, 12) comprise means for transmitting data at a rate of 19,200 baud.

7. System according to claim 5, c h a r a c t e r i z e d i n   t h a t   said first and second stations (11, 12) comprise means for transmitting data at a rate of 9,600 baud.

8. System according to claim 5, c h a r a c t e r i z e d i n   t h a t   said first and second stations (11, 12) comprise means for transmitting data at a rate of 4,800 baud.

Fig. 1

Fig. 2

BIT PERIOD | 1 | 2 | 3 | 4 | 5 |

BINARY CODE | 0 | 1 | 1 | 0 | 0 |

NON RETURN TO ZERO

MANCHESTER

*Fig. 3*

*Fig. 4*

*Fig. 5*

*Fig. 6*

*Fig. 7*